# EUROPEAN PATENT SPECIFICATION

(11) **EP 0 806 536 B1**
(45) Date of publication and mention of the grant of the patent: **14.04.2004**
(21) Application number: 96900326.8
(22) Date of filing: 17.01.1996
(51) Int. Cl.: E05F 15/10, H01H 47/00

(54) **CONTROL SYSTEM FOR AUTOMATIC DOORS**
BEDIENUNGSSYSTEM FÜR AUTOMATISCHE TÜREN
SYSTEME DE COMMANDE DE PORTES AUTOMATIQUES

(30) Priority: 11.10.1995 ES 9501964
(43) Date of publication of application: 12.11.1997
(73) Proprietor: Faiveley Espanola, S.A., 43080 Tarragona (ES)
(72) Inventor: BOJ CABISTAN, Victor Juan, E-43080 Tarragona (ES)
(74) Representative: Carpintero Lopez, Francisco
(86) International application number: PCT/ES1996/000006
(87) International publication number: WO 1997/013949

## Description

### OBJECT OF THE INVENTION

This invention refers to a safe control system with a single microcontroller, which has been especially designed for automatic doors, such as those used in railway carriages, in which safety at the moment of giving the order to open the doors has to be absolute, given the logical effects of this action on the physical integrity of travellers.

The object of the invention is to establish a safety system for opening doors, which is as safe or safer than a classical logic system using relays, and which is also capable of intelligently controlling the movement of contacts, ensuring that this only takes place at the correct times.

### THE BACKGROUND OF THE INVENTION

Traditionally in the world of rail passenger transport, as well as in other areas in which similar performance is required, two or three main variables are taken into account in governing the opening of carriage doors: one line for opening the doors (LA); another line for closing them (LC) and in some cases, the speed (V) of the vehicle to act in a redundant fashion to the order for closure (LC).

These variables directly affect certain relays which determine the direction in which the motor turns, and which with their relevant interlocks, authorise or prevent the opening of the doors when the order is stable, i.e., if for example on the basis of a situation of rest in which line LA is deactivated, line LC is activated and speed is high, another situation arises in which line LA is activated, line LC is deactivated and speed is zero or low, then the doors are opened, this consisting in practice of what is commonly known as direct control.

These classical methods for door control attain a high level of safety, thanks to the above - mentioned interlocks, given that if starting out from the same position of rest, if due to any reason the opening line connects with positive, line LC will also remain positive and if speed is also high, then this does not give rise to the conditions needed for the doors to be opened, i.e., the system acts with two logical steps (LA, LC) or three (LA, LC, V).

Likewise, these systems for direct control present an additional problem, and this is that the contacts of the relays move when the order changes, without taking into account the current which is moving across the contacts, with opening-closing-opening manoeuvres which are highly continuous, such as those arising in a station when the operator of the train opens and closes the doors repeatedly for the late entry of passengers, the contacts may become burnt, given that the inductive charge which they have to cut for the purposes of this manoeuvre is quite large, i.e., the corresponding and well - known spark is produced at the contacts. Timers are used to solve this problem, based on condensers in parallel to the relays, although nevertheless these timers are not an optimum solution due to several different reasons, given that the condensers may dry out, and may suffer variations in their capacity over time, as well as that manoeuvres or counter-manoeuvres may take place more quickly or more slowly, etc. ...

Another method for manoeuvres of this type is to use a microcontroller, which makes use of practically the same variables to decide when the conditions are correct for the activation of the opening relay or the activation of the closing relay in an intelligent way, so that movement of the relay always occurs without the presence of current in the contacts and in the shortest possible time.

This method, which during normal working offers advantages arising from the intelligent control of the relays, nevertheless presents a highly delicate problem in terms of safety, and this consists of the high dependence of the system on a single component, i.e., that in case of a fault arising in the microcontroller an unforeseen and ill-timed situation in the relays, which may definitively give rise to the opening of the doors at the wrong time.

Given this possibility, redundant systems tend to be used in practice, with 2, 3 or more microcontrollers, thereby attaining the degree of safety that is necessary for this operation, although with the drawback that the cost is notably increased by this solution, as well as its size, due to the inclusion of more than one microcontroller.

The german patent DE-C-4340715 describes an electromechanically operated door having a control and regulation system for a door, the door being driven by an electric motor and the movement of the door being controlled by sensors. The control and regulations system is equipped with a microprocessor control, and a dual redundancy is achived since a safety monitoring system is provided, which receives the same safety-related information as the microprocessor control.

As shown in figure 1 of DE-C-4340715, this control and regulation system, is set on the basis of a doble redundancy or doble-channel arrangement, since, independently of the microprocessor control, the safety monitoring system 27, in connection with the fault alarm unit 47, is able to bring the connected motor to a stop.

This doble-channel arrangement involves a large number of components and therefore implies a higher cost.

The U.S-A-5.321.343 patent describes a digital motor control system, for controlling energization of one or more dc motors, with ac power. The system includes digital processor means digitally generating plural paralel control loops each controlling a selected motor parameter, in response to an associated parameter signal.

The digital control system is implemented with transputers, which is a digital processor with a limited number of registers and minimum set of instructions.

Hovewer, the teaching of this patent is far out of the scope of the present invention.

### DESCRIPTION OF THE INVENTION

The control system for automatic doors proposed by this invention has been designed to resolve in a fully satisfactory way the problems described above, thanks to which it is possible to undertake the manoeuvre of opening or closing the doors with a high degree of safety, while also simultaneously preventing the burning of the relay contacts involved in opening and closing.

To this end, and more specifically, the control system proposed by the invention is fundamentally based on a single microcontroller, which by making use of internal automatic controls reads the said variables in three or more successive instants for each one, and using at least two different routes for each, and by the generation of complex and dynamic signals at such a frequency that relays are excited, acts to prevent the untimely opening of doors, as if the system used three or more microcontrollers, in terms of time rather than space.

This brief introduction alone makes it possible to clearly appreciate one of the main advantages deriving from the usage of this system, i.e., that the introduction of this system gives rise to considerable savings in economic terms, from the viewpoint of the development and manufacture of the final design of the system for controlling doors, as well as a prolongation of the useful life of the relays.

Functionally, the system consists of a microcontroller with three or more inputs for the variables governing the orders to close and speed, as well as three or more other inputs to receive information on the state of the transistor used to supply the relays, and the state of the two transistors governing the relays.

Likewise, the microcontroller supplies a signal at a frequency that is linked to the internal timer and the supervisor (watchdog) of the microcontroller, and through a condenser, which is no more than a clock signal which goes on to be used to set the sequence which the system is to follow in its checking phase, and which is only to be present if the state of the supervisor (watchdog) is at one and all of the controls for checks carried out by the microcontroller are correct.

The system is structured in such a way that the microcontroller receives on the one hand the variables pertaining to the system, i.e. the lines of the orders to open (LA) or to close (LC) (as well as the signal indicating speed), so that by making use of the high performance of this type of electronic device, each of the readings of the said system variables is repeated two, three or more times, using different ports or by the same port but in a different form, i.e., changing the declaration of the port in question so that it may use direct input, input with a digital analogue converter, etc.... all this depending on the microcontroller which is used and the ports with which it is equipped.

Physically, this phase of the reading of each one of the variables corresponding to system orders may be undertaken by the input of the microcontroller itself, although internally reading is not carried out by the same circuits, that is the same value of a reading runs internally along different routes. These readings are then stored in an appropriate way in different microcontroller records.

The relays (RA or RC) are powered by chopped direct current, in such a way that there is always a frequency component passing through a condenser to activate the relays.

On the other hand, as well as the readings of the orders which have already been remarked, the microcontroller data on the state of the relay power transistor through the corresponding adaptation stages, as well as the state of the two transistors which command their respective relays, in such a way that the good working (cutting, conducting) of each transistor is continually verified.

The microcontroller checks that the data of a sequence previously stored in its memory coincide with the sequence which it receives through its inputs E1, E2 and E3, corresponding to the state of the transistor powering the relays, and that of the transistors governing the said relays. In the case that the orders of the microcontroller do not coincide with the readings taken, then it will automatically stop the motor by inhibiting the chopper through the inhibition / activation line (CE) while switching the speed order line to the motor (VM) to zero, and then immediately declaring a reset situation and returning to the initial state of the system.

In the same way, if one of the transistors suffers a short circuit during the checking sequence, and therefore does not coincide with the orders of the microcontroller, a special stoppage routine is then initiated, which stops the motor activating the doors if this is in traction mode, given that a complete reset of the system would burn out the contacts.

Definitively, the system checks that every order given is obeyed in correct fashion, in such a way that if a fault arises in the microcontroller then it is practically impossible for the signals necessary for the relays to be excited to be generated, while if two transistors (5, 7, or 6, 7) suffer a fault simultaneously then motor traction is inhibited by the microcontroller through the cutting of the chopper (CE) and the reduction to zero of the motor speed order (VM). Likewise, the unchopped current circulating through the relays will increase the intensity consumed by their windings and give rise to the activation of the overcurrent protection (9).

### DESCRIPTION OF THE DRAWINGS

To complement this description and with the aim of helping towards better comprehension of the characteristics of the invention, this descriptive report is accompanied, as an integral part of the same, by a set of drawings in which, as illustrations and not limitations, the following are shown:
Figure 1.- Shows a diagrammatic representation of the control system for automatic doors constructed in agreement with the subject of this invention.
Figure 2.- Shows a diagrammatic representation of an oscillogram in which as an example the changes of state occurring in the signals involved in the system are shown, during a checking sequence in the case of the activation of the opening relay (RA), and in which discontinuous vertical lines appear, corresponding to the instants at which the microcontroller takes readings.

### PREFERENTIAL EMBODIMENT OF THE INVENTION

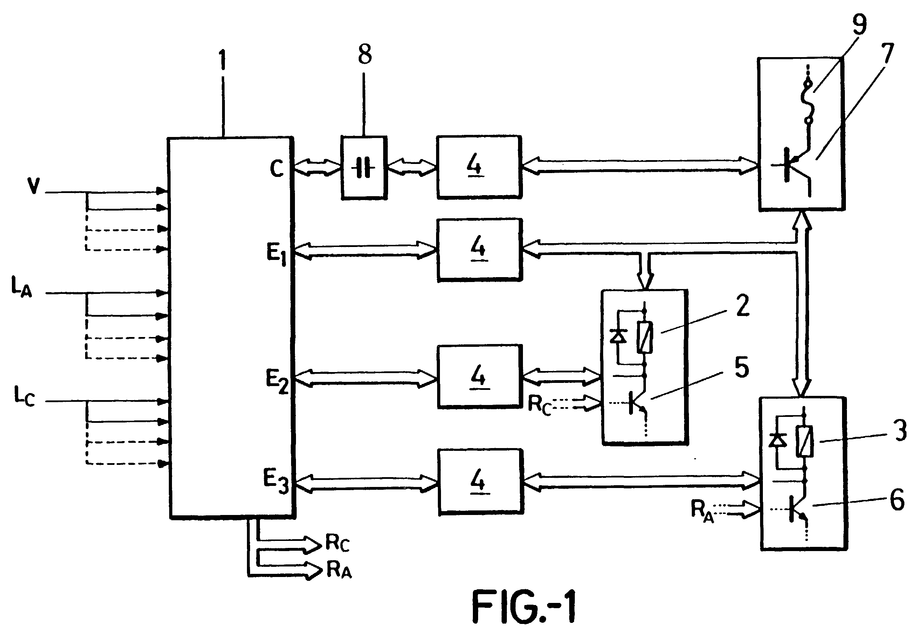

In the light of these figures, and more specifically figure 1, it may be seen how the proposed control system is structured on the basis of a microcontroller (1), which takes readings of orders to open (LA) and to close (LC) as well as the speed (V) of the moving vehicle, either through different input ports or in different forms through the same port. That is, the declaration of the port through which readings are taken is changed, so that it may be direct input, or through an analogue - digital converter, etc...

Each manoeuvre relay is governed by a switching component, preferentially two pole transistors, i.e., the closure relay (2) is governed by the action of the transistor (5) while the relay for opening (3) is governed by the transistor (6), these two transistors (5) and (6) being powered by another transistor (7) with its corresponding overload protection (9) in series.

The reading of the state of the power transistor (7), the closure relay transistor (5) and the opening relay transistor (6) is undertaken through the corresponding stages of adaptation (4), by means of inputs E1, E2 and E3 of another of the microcontroller (1) ports.

The microcontroller (1) generates a signal C at a frequency linked to the internal timer and supervisor (watchdog) of the microcontroller (1) through a condenser (8). This is the clock signal which determines the sequence followed by the system in its checking phase, and which is only to be present if the state of the supervisor (watchdog) and the verifications are correct.

Definitively, by means of this system, as well as increasing safety to a great extent, is also able to eliminate the classic effects of sparking at the control relay contacts, which over the long term has a positive effect on the working performance of the system, given that it permits the said contacts to be used for longer periods of time, as it lengthens their useful lives.

The system which is the subject of this invention is explained below, with the aid of the following example, which is offered as an illustration of the invention and should not be considered to limit the scope of the same.

### EXAMPLE

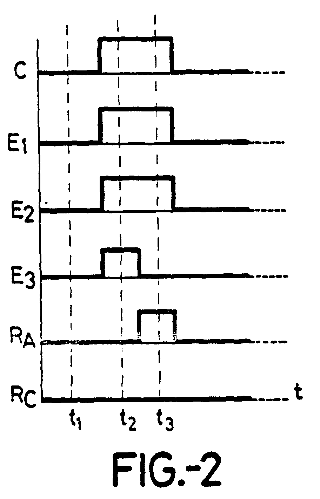

This example illustrates the working of the system which is the subject of this invention with the aid of the oscillogram shown in figure 2.

As may be seen, in the absence of the order to open, when the clock signal generated by the microcontroller at output C switches to a logic or high level signal, the three points of reading, which correspond to the state of the power transistor for the relay (7) transistors, which (5) and (6) are also at a high level.

At the moment of giving the order to open to the transistor (6), this transistor switches to conduction (saturation) so that it passes the signal E3 to low level. Instants afterwards, when the order to open relay has been given and the clock signal passes to low level, the other two signals representing the state of the transistors switch to zero, i.e., the transistors (5) and (6) switch to shut - off.

All of these orders are received automatically by the microcontroller (1) through the level adaptor stages (4) and it compares them with the sequence which it stored beforehand in memory of the prior readings.

The following table showing Safety mechanisms describes the effect (with the cause of the effect in brackets) which is brought about in the case of a fault arising in any of the basic control elements of the system.

| FAULT | EFFECT | OPENING |
|---|---|---|
| 1 Tr | Stoppage of the motor (µC) + Drop of the relays (µC) | IMPOSSIBLE |
| 2 or 3 Tr's | Stoppage of the motor (µC) + Drop of the relays (9) | IMPOSSIBLE |
| µC | Stoppage of the motor + drop of relays (absence of signals at suitable frequency) | IMPOSSIBLE |

## Claims

1. A safe control system for automatic doors, comprising a microcontroller which undertakes readings of variables to open and close the door, a relay for the order to close and a relay for the order to open the door, **characterised in that** its structure is based on a single microcontroller (1) which by making use of internal automatic controls reads said variables in three or more succesive instants for each one of said variables, and generates a signal at a frecuency that excites said relays, thereby preventing the untimely opening of the door, and **in that** the relay for the order to close (2) is governed by the action of a switching component, preferentially a transistor (5), and **in that** the relay for the order to (3) is governed also by action of a switching component, preferentially a transistor (6), these two switching components, preferentially transistors, being powered by another transistor (7) with its corresponding overcurrent protection (9) in series, the microprocesor having three or more inputs for the variables governing the orders to open (LA) and the orders to close (LC), and also the speed of the vehicle in which the door is installed, as well as three or more other inputs to receive information on the state of the transistor (7) used to supply the relays (2) and (3) and the state of the two transistors (5) and (6) governing the relays (2) and (3).

2. A safe control system for automatic doors, according to claim 1, **characterised in that** the readings of the state of the power transistor (7), the closure relay transistor (5) and the opening relay transistor (6) are carried out through their corresponding adaptation stages (4), by means of the corresponding inputs of another one of the ports with which the microcontroller (1) is equipped.

3. A safe control system for automatic doors, according to the above claims, **characterised in that** the microcontroller (1) generates frequency signals C, RA, RC, over the relays, linked to the internal timer and supervisor of the microcontroller (1) and through a condenser (8), which sets a sequence followed by the safe control system in its checking phase (t₁, t₂, t₃).

4. A safe control system for automatic doors, according to claim 1, **characterised in that** each reading taken by the microcontroller (1) is carried out either through different input ports or by the same port although in different modes, changing the declaration of the port inputs, so that internally these readings follow different routes.

5. A safe control system for automatic doors, according to the above claims, **characterised in that** it is designed such that in the case of faults arising simultaneously in transistors (5, 7) or (6, 7) the safe control system avoids maintaining the relays excited with unchopped current in a suitable cyclic ratio, given that pure direct current causes the current in the winding of the relay to increase excessively, and gives rise to the activation of the overcurrent protection (9).

6. A safe control system for automatic doors, according to the above claims, **characterised in that** the microcontroller (1) is designed such that it continually verifies the correct working of the accumulator, the internal signals and the comparing logical operations, as a prior condition for the comparison between the several reading of input variables, bringing about a reset situation in case of fault.

## Patentansprüche

1. Ein sicheres Kontrollsystem für automatische Türen, das eine Mikrokontrollvorrichtung umfasst, die Variablen zum Öffnen und Schliessen der Tür, ein Relais für den Befehl, die Tür zu schliessen und ein Relais, um sie zu öffnen, **dadurch gekennzeichnet, dass** seine Struktur auf einer einzigen Mikrokontrollvorrichtung (1) basiert, welches unter Anwendung von internen automatischen Kontrollen die besagten Variablen in drei oder mehreren aufeinanderfolgenden Momenten für jede einzelne diese Variablen abliest und ein Signal erzeugt auf einer Frequenz, die das besagte Relais erregt, womit verhindert wird, dass die Tür zum falschen Zeitpunkt geöffnet wird, und dadurch, dass das Relais für den Befehl zum Schliessen (2) durch das Auslösen einer Schaltkomponente kontrolliert wird, vorzugsweise ein Transistor (5) und dadurch, dass das Relais für den Befehl zum Öffnen (3) auch durch das Auslösen einer Schaltkomponente kontrolliert wird, vorzugsweise einem Transistor (6), wobei diese beiden Schaltkomponenten, vorzugsweise Transistoren durch einen weiteren Transistor (7) angetrieben werden mit der entsprechenden Sicherheit gegen Überstrom (9) in Reihe geschaltet, wobei der Mikroprozessor über drei oder mehr Eingaben für die Variablen verfügt, die den Befehl zum Öffnen (LA) und den Befehl zum Schliessen (LC) kontrollieren und auch die Geschwindigkeit des Bewegungsmechanismus, auf dem die Tür montiert ist, sowie drei oder mehr weitere Eingaben, um Information hinsichtlich des Zustands des Transistors (7) zu erhalten, der verwendet wird, um die Relais (2) und (3) zu versorgen und den Zustand der zwei Transistoren (5) und (6), die die Relais (2) und (3) kontrollieren.

2. Ein sicheres Kontrollsystem für automatische Türen, gemäss Anspruch 1, **dadurch gekennzeichnet, dass** das Ablesen des Zustands des Stromtransistors (7), des Transistors des Schliessrelais (5) und des Transistors des Öffnungsrelais (6) mittels der entsprechenden Anpassungsstufen (4) durchgeführt wird durch die entsprechenden Eingaben eines weiteren Ports mit dem die Mikrokontrollvorrichtung (1) ausgestattet ist.

3. Ein sicheres Kontrollsystem für automatische Türen, gemäss den vorangegangenen Ansprüchen, **dadurch gekennzeichnet, dass** die Mikrokontrollvorrichtung (1) Frequenzsignale C, RA, RC über den Relais erzeugt, die an einen internen Timer und Datenüberwacher der Mikrokontrollvorrichtung (1) verfügt und durch einen Kondensator (8), der eine Sequenz festlegt, der das sichere Kontrollsystem bei der Prüfphase (t₁, t₂, t₃) folgt.

4. Ein sicheres Kontrollsystem für automatische Türen, gemäss Anspruch 1, **dadurch gekennzeichnet, dass** jedes von der Mikrokontrollvorrichtung (1) durchgeführte Ablesen entweder mittels verschiedener Eingabeports durchgeführt wird oder durch den selben Port, wenn auch mit unterschiedlichen Modi, so dass sich die Meldung der Porteingaben ändert, so dass das Ablesen intern verschiedene Routen nimmt.

5. Ein sicheres Kontrollsystem für automatische Türen, gemäss den vorangegangenen Ansprüchen, **dadurch gekennzeichnet, dass** es so konzipiert ist, dass im Falle von gleichzeitig auftretenden Fehlern in den Transistores (5, 7) oder (6, 7) das sichere Kontrollsystem verhindert, dass die Relais weiterhin mit UNCHOPPED Strom erregt werden in einer angemessenen zyklischen Übersetzung, vorausgesetzt, dass der reine direkte Strom eine übermässige Erhöhung des Stroms in den Relaiswindungen auslöst und damit die Überstromsicherung (9) auslöst.

6. Ein sicheres Kontrollsystem für automatische Türen, gemäss den vorangegangenen Ansprüchen, **dadurch gekennzeichnet, dass** die Mikrokontrollvorrichtung (1) so konzipiert ist, dass sie ständig das korrekte Funktionieren des Akkus, der internen Signale und der vergleichenden, logischen Operationen überprüft, als eine vornehmliche Bedingung für den Vergleich zwischen den verschiedenen Ablesungsvorgängen der Inputvariablen, was im Falle eines Fehlers zu einer Rücksetzung führt.

## Revendications

1. Un système sûr de contrôle pour portes automatiques, comprenant un microcontrôleur qui réalise des lectures des variables pour ouvrir et fermer la porte, un relais pour l'ordre de fermeture et un relais pour l'ordre d'ouverture de la porte, caractérisé en ce sa structure est basée sur un seul microcontrôleur (1) qui en utilisant des commandes automatiques internes lit lesdites variables lors de trois ou plus instants successifs pour chacune desdites variables, et il génère un signal à une fréquence qui excite ledit relais, en prévenant ainsi l'ouverture inopportune de la porte, et en ce que le relais pour l'ordre de fermeture (2) est piloté par l'action d'un composant de commutation, de préférence un transistor (5), et en ce que le relais pour l'ordre d'ouverture (3) est aussi piloté par l'action d'un composant de commutation, de préférence un transistor (6), ces deux composants de commutation, de préférences des transistors, étant alimentés par un autre transistor (7) avec sa protection de surintensité correspondante (9) en série, le microprocesseur ayant trois entrées ou plus pour les variables qui pilotent les ordres d'ouverture (LA) et les ordres de fermetures (LC), et aussi la vitesse du véhicule sur lequel la porte est installée, ainsi que trois ou plusieurs autres entrées pour recevoir de l'information sur l'état du transistor (7) utilisé pour alimenter les relais (2) et (3) et sur l'état des deux transistors (5) et (6) qui pilotent les relais (2) et (3).

2. Un système sûr de contrôle pour portes automatiques, selon la revendication 1, **caractérisé en ce que** les lectures de l'état du transistor de puissance (7), le transistor du relais de fermeture (5) et le transistor du relais d'ouverture (6) sont réalisées à travers des étapes d'adaptation correspondantes (4), au moyen des entrées correspondantes d'un autre des ports dont le microcontrôleur (1) est équipé.

3. Un système sûr de contrôle pour portes automatiques, selon les revendications précédentes, **caractérisé en ce que** le microcontrôleur (1) génère des signaux de fréquence C, RA, RC sur les relais, reliés au temporisateur interne et au superviseur du microcontrôleur (1) et à travers un condenseur (8), qui établit une séquence suivie du système sûr de contrôle lors de sa phase de vérification (t₁, t₂, t₃).

4. Un système sûr de contrôle pour portes automatiques, selon la revendication 1, **caractérisé en ce que** chaque lecture réalisée par le microcontrôleur (1) est effectuée soit à travers des ports d'entrée différents, soit par le même port mais dans des modes différents, en changeant la déclaration des entrées de port, pour qu'internement, ces lectures suivent des routes différentes.

5. Un système sûr de contrôle pour portes automatiques, selon les revendications précédentes, **caractérisé en ce qu'**il est conçu pour qu'en cas de pannes simultanées dans les transistors (5, 7) ou (6, 7), le système sûr de contrôle évite de maintenir les relais excités avec le courant sans coupure dans un rapport cyclique approprié, car le courant continu pur produit un incrément excessif du courant dans le bobinage du relais, et il provoque l'activation de la protection de surintensité (9).

6. Un système sûr de contrôle pour portes automatiques, selon les revendications précédentes, **caractérisé en ce que** le microcontrôleur (1) est conçu pour vérifier constamment le fonctionnement correct de l'accumulateur, les signaux internes et les opérations logiques de comparaison comme condition préalable pour la comparaison entre les diverses lectures des variables d'entrée, en provoquant une situation de réinitialisation en cas de panne.
